Europäisches Patentamt

(19) **European Patent Office**

Office européen des brevets

(11) Veröffentlichungsnummer: **0 096 322**
**B1**

(12) # EUROPÄISCHE PATENTSCHRIFT

(45) Veröffentlichungstag der Patentschrift:
**29.10.86**

(21) Anmeldenummer: **83105303.8**

(22) Anmeldetag: **28.05.83**

(51) Int. Cl.⁴: **B 01 J 35/02,** B 01 J 23/88,
C 01 B 3/16, C 10 K 3/04

(54) Katalysator zur Umwandlung von Kohlenmonoxid und Wasserdampf in schwefelhaltigen Gasen, Verfahren zur Herstellung des Katalysators und Anwendung desselben.

(30) Priorität: **08.06.82 DE 3221582**

(43) Veröffentlichungstag der Anmeldung:
**21.12.83 Patentblatt 83/51**

(45) Bekanntmachung des Hinweises auf die Patenterteilung:
**29.10.86 Patentblatt 86/44**

(84) Benannte Vertragsstaaten:
**BE DE FR GB NL**

(56) Entgegenhaltungen:
**EP - A - 0 008 424**
**DE - A - 2 038 165**
**DE - B - 2 054 869**
**DE - C - 1 667 386**
**GB - A - 948 085**
**GB - A - 1 446 175**
**US - A - 4 153 580**

(73) Patentinhaber: **BASF Aktiengesellschaft,**
**Carl-Bosch-Strasse 38, D-6700 Ludwigshafen (DE)**

(72) Erfinder: **Appl, Max, Dr., Berliner Strasse 12,**
**D-6701 Dannstadt-Schauernheim (DE)**
Erfinder: **Gruendler, Karl-Heinz, Dr., Hockenheimer**
**Strasse 16, D-6703 Limburgerhof (DE)**
Erfinder: **Zirker, Guenter, Dr., Schelmenzeile 78,**
**D-6700 Ludwigshafen (DE)**
Erfinder: **Laurer, Peter Rudolf, Dr., Freinsheimer**
**Strasse 33, D-6700 Ludwigshafen (DE)**
Erfinder: **Irgang, Matthias, Dr., Andreas-Hofer-Weg 41,**
**D-6900 Heidelberg (DE)**

## Beschreibung

Bei der Herstellung von Synthesegas erhält man Gase mit unterschiedlichen Kohlenmonoxid-Gehalten und schwefelhaltigen Verunreinigungen. Insbesondere bei der Partialoxidation von schwerem Heizöl und/oder Kohle entstehen schwefelhaltige, CO-reiche Gase, die für viele Synthesen in mehr oder weniger grossem Umfang durch Konvertierung in wasserstoffreiche Gase umgewandelt werden müssen. Häufig ist es vorteilhaft, die Konvertierung ohne vorhergehende $H_2S$-Entfernung durchzuführen. Dazu werden schwefelfeste Konvertierungskatalysatoren eingesetzt.

Katalysatoren, die Molybdän und Kobalt enthalten und die im sulfidischen Zustand die Konvertierungsreaktion beschleunigen, sind aus DE-C 1 085 287, DE-B 1 667 386, DE-B 2 054 869 und US-A 4 153 580 bekannt. Auch der Zusatz von Alkali ist durch GB-A 948 085 bekannt.

Die bekannten Katalysatoren werden in Form von Extrudaten, Tabletten oder Kugeln eingesetzt.

Katalysatoren, die Lanthan- bzw. Seltenerd-Verbindungen, wie US-A 4 153 580, enthalten, sowie ZnO- bzw. MgO-haltige Katalysatoren nach DE-B 1 667 386, besitzen zwar eine gute Langzeitstabilität der mechanischen Festigkeit und der BET-Oberfläche, jedoch ist bei ihnen die Konvertierungsaktivität unterhalb 280 °C unzureichend.

Alkalihaltige Katalysatoren mit reinem $Al_2O_3$-Träger gemäss DE-B 2 054 869, ergeben hohe CO-Umsätze auch im Bereich tiefer Temperaturen (220–280 °C) und niedriger Drucke. Jedoch haben Träger aus Gamma- oder Eta-Aluminiumoxid den Nachteil, dass sie gegenüber Wasserdampf bei hohen Drucken sehr empfindlich sind. Das $Al_2O_3$ wandelt sich hydrothermal in Autoklavenböhmit um und dadurch verlieren Formkörper ihre Festigkeit und der Abrieb steigt stark an.

In EP-A-8424 und GB-A 1 446 175 sind kleeblattförmige Katalysatoren für hydrierende Behandlung von Erdölprodukten im Sumpf- oder Rieselverfahren beschrieben. Demgegenüber läuft die Umwandlung von Kohlenmonoxid und Wasserdampf in schwefelhaltigen Gasen in der Gasphase ab. Somit sind Funktion und Beanspruchung verschieden, da bei der Gasphasenreaktion die Diffusionsvorgänge im Katalysatorkorn geschwindigkeitsbestimmend sind.

Die Erfindung betrifft einen Katalysator zur Umwandlung von Kohlenmonoxid und Wasserdampf in schwefelhaltigen Gasen zu Kohlendioxid und Wasserstoff, bestehend aus Oxiden und/oder Sulfiden der Elemente Kobalt und/oder Nickel, Molybdän und Alkalisalzen sowie einem Träger aus Magnesium-Aluminiumspinell, bei dem der Katalysatorformkörper eine ring- oder sternförmige Querschnittsfläche oder sternförmige Querschnittsflächen mit abgerundeten Ecken sowie kleeblattförmige Querschnittsflächen besitzt.

Die Erfindung betrifft weiterhin ein Verfahren zur Herstellung eines Katalysators dieser Art, wobei das Trägermaterial zusammen mit den Aktivkomponenten vermischt, und die in eine verformbare Konsistenz gebrachte Masse ausgepresst oder tablettiert wird. Man kann das Trägermaterial selbst oder das Trägermaterial zusammen mit einem Teil der Aktivkomponenten zu Formkörpern verarbeiten und die Aktivkomponenten bzw. ein Teil der Aktivkomponenten in einem oder mehreren Tränkschritten auf die Formkörper aufbringen.

Die Erfindung betrifft weiterhin die Anwendung dieser Katalysatoren für die Umwandlung von Kohlenmonoxid und Wasserdampf in schwefelhaltigen Gasen zu Kohlendioxid und Wasserstoff bei Temperaturen zwischen 180 und 550 °C und bei einem Druck zwischen 1 und 150 bar in einstufigen oder mehrstufigen Konvertierungsanlagen mit Zwischenkühlung zwischen den einzelnen Stufen.

Vorteilhaft wird der Katalysator bei einer mehrstufigen Konvertierung als Tieftemperaturkonvertierungskatalysator in einer zweiten und einer dritten Konvertierungsstufe oder nur in der letzten Konvertierungsstufe eingesetzt, während für die übrigen Konvertierungsstufen ein konventioneller Konvertierungskatalysator verwendet wird. Bei einstufigen oder bei mehrstufigen Konvertierungsanlagen kann man in einer oder in mehreren Stufen jeweils nur einen Teil des konventionellen Katalysators durch den erfindungsgemässen ersetzen, insbesondere 10 bis 50% der oberen Teile der Katalysatorbetthöhe einer Konvertierungsstufe.

Aufgabe der Erfindung war es, einen Katalysator zu finden, der gleichzeitig einen hohen CO-Umsatz liefert und unter den Verfahrensbedingungen eine grosse Lebensdauer besitzt. Dies bedeutet, dass auch bei Temperaturen von 220 bis 280 °C und niedrigen Drucken der CO-Restgehalt nur wenig über dem Gleichgewichtswert liegen soll, dass eine hohe Raum-Zeit-Ausbeute erreicht wird, um mit geringen Katalysatorvolumina den gewünschten CO-Umsatz zu erreichen, dass der Katalysator hohe mechanische Festigkeit besitzt und Aktivkomponenten und Träger nur geringfügige Alterungserscheinungen aufweisen. Schliesslich sollen auch Druckverlust und Litergewicht möglichst gering sein.

Erfindungsgemäss werden Katalysatorformen angewendet, die ein grösseres Oberfläche/Volumen-Verhältnis besitzen. Insbesondere sind dafür ring-, stern- oder kleeblattähnliche Katalysatorquerschnitte geeignet, d.h. alle Formen, deren geometrische Gestalt von der Kugel- oder Zylinderform abweicht, indem ihre Querschnittsfläche kleiner als ein umbeschriebener Kreis ist. Insbesondere bezieht sich die Erfindung auf alle konkaven Katalysatorformen. Ein geometrischer Körper ist dann konkav, wenn Paare von Punkten auf der Querschnittsfläche existieren, die durch eine Gerade verbunden werden können, welche nicht völlig innerhalb der Querschnittsfläche verlaufen.

Diese besonderen Katalysatorformen erfüllen gleichzeitig die Forderung nach hohem Oberfläche/Volumen-Verhältnis und nach niedrigem Druckverlust.

Für den Druckverlust wird der dimensionslose Widerstandsbeiwert $\xi$ 1000 einer Katalysator-

schüttung, normiert auf Reynoldszahl = 1000 und kugelförmige Katalysatorpartikel mit d = 10 mm, angegeben.

Die günstigste Formgebung liegt für das vorliegende Problem dann vor, wenn O/V besonders gross und gleichzeitig $\xi$1000 möglichst klein ist.

| Form | D | L | O | V | $\frac{O}{V}$ | $\xi$1000 |
|---|---|---|---|---|---|---|
| | (mm) | (mm) | (cm²) | (cm³) | (cm⁻¹) | |
| Kugel | 3 | — | 0,28 | 0,014 | 20 | 200 |
| Kugel | 6 | — | 1,13· | 0,113 | 10 | 60 |
| Zylinder | 1,5 | 4 | 0,23 | 0,007 | 33 | 360 |
| Zylinder | 4 | 7 | 1,13 | 0,088 | 13 | 100 |
| Dreistern | 4 | 7 | 0,94 | 0,035 | 27 | 90 |
| Fünfstern | 4 | 7 | 1,40 | 0,042 | 34 | 80 |

Aus der Tabelle geht hervor, dass die besten Werte bei den sternförmigen Katalysatoren erzielt werden. Der Dreistern hat dabei den Vorteil, dass er mechanisch stabiler und leichter herstellbar ist als der Fünfstern.

Es wurde beobachtet, dass durch den Einsatz der sternförmigen Katalysatoren eine starke Annäherung an die CO-Gleichgewichtskonzentration möglich ist. Besonders im Bereich niedriger Reaktionstemperaturen konnte der Rest-CO-Gehalt beim Einsatz der sternförmigen Katalysatoren um 30 bis 50% gegenüber dem Rest-CO-Gehalt abgesenkt werden, der unter gleichen Versuchsbedingungen mit zylinderförmigen Katalysatoren erhalten wurde. Die Absenkung des Rest-CO-Gehaltes bietet insbesondere dann erhebliche Vorteile, wenn, wie bei der Synthesegasherstellung für die Ammoniaksynthese, ein vollständig CO-freies Gas gefordert wird. In diesem Fall wird grösstenteils das nicht durch Konvertierung umgesetzte CO durch Methanisierung in $CH_4$ übergeführt, das als Inertgasbelastung in die Ammoniaksyntheseschleife gelangt. Eine Absenkung des Inertgasgehaltes bewirkt eine Einsparung an Energie und eine verbesserte Ausbeute des eingesetzten Synthesegases; das bedeutet auch weniger Abgas.

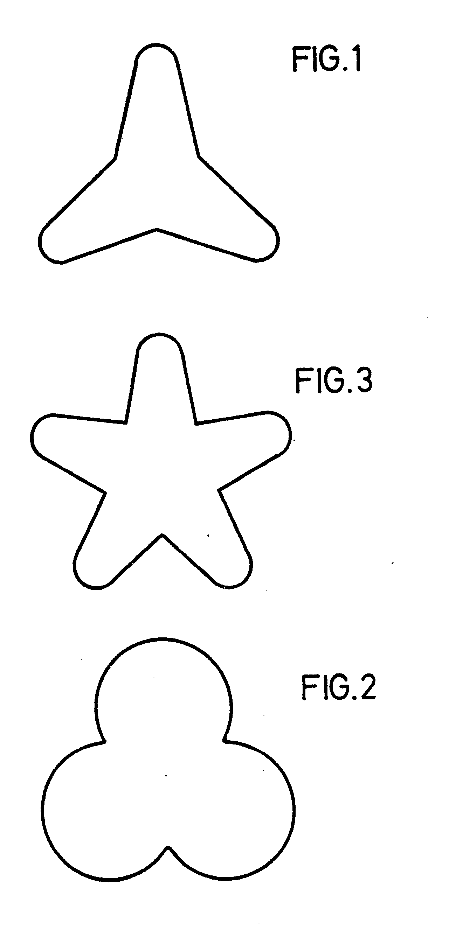

Die durch Verwendung von sternförmigen Katalysatoren verbesserte Tieftemperaturaktivität bietet auch dadurch einen energiesparenden Vorteil, dass durch Absenkung der Reaktionstemperatur z.B. in einer zweiten Konvertierungsstufe zwischen den Konvertierungsstufen mehr Wärme gewonnen werden kann. Mögliche geometrische Querschnittsformen sind beispielsweise durch die Figuren 1, 2 und 3 wiedergegeben. Mit der Herstellung von konkaven Formkörpern dieser Art werden folgende Vorteile gegenüber den bisher bekannten Katalysatoren erzielt: Höhere Aktivität, d.h. geringere CO-Restkonzentration und tiefere Reaktortemperatur, längere Lebensdauer, resultierend aus höherer Anfangsaktivität und tieferer Betriebstemperatur, geringer Druckverlust, grösseres Lückenvolumen und damit bessere Staubrückhaltung.

Die für die Konvertierung geeigneten schwefelfesten Katalysatoren enthalten als Aktivkomponenten Elemente der 6. und 8. Nebengruppe des Periodensystems, insbesondere Mo/Co und Mo/ Ni. Als Promotoren sind in diesen Katalysatoren häufig Alkali- und Erdalkaliverbindungen enthalten.

Die Herstellung der erfindungsgemässen Katalysatoren geht von einem geeigneten Trägermaterial aus, z.B. Magnesium-Aluminiumspinell oder einem Magnesiumoxid/Aluminiumhydroxid-Gemisch. Dieses pulverförmige Trägermaterial wird mit den Aktivkomponenten gut vermischt und in einem Kneter oder einer ähnlichen Mischapparatur in eine verformbare Konsistenz gebracht. Anschliessend erfolgt die Verformung, in der Regel durch Auspressen der Paste durch geeignete, z.B. sternförmige Düsen. Für konventionelle Katalysatoren werden zumeist kreisförmige Auspressdüsen verwendet. Eine Formgebung durch Tablettierung ist ebenfalls möglich und kann konkave Formkörper liefern. Bei der Katalysatorherstellung kann man auch von bereits verformten Trägern ausgehen. Die Aufbringung der Aktivkomponenten und Promotoren erfolgt dann durch Tränken oder Aufsprühen.

Die Aktivitätsprüfung der Katalysatoren wurden bei erhöhtem Druck, z.B. 10, 30, 50 bar und bei einer Trockengaszusammensetzung von 10% CO, 34% $CO_2$, 55% $H_2$, 0,5% $H_2S$ und 0,5% Inertgas vorgenommen. Das Wasserdampf/Trockengas-Verhältnis betrug 1,0. Temperatur, Druck und Katalysatorbelastung wurden variiert.

Beispiel 1

Ein Gemisch aus 75% AlOOH und 25% MgO wird feinst gemahlen und unter Zusatz von 6% Salpetersäure (65%ig) in einem Kneter vermischt und 3 Stunden lang bis zur Verformbarkeit unter Zugabe von Wasser verdichtet. Dann wird durch eine sternförmige Matrize (Umkreis des Sterns: 4 mm, s. Fig. 1) ausgepresst. Anschliessend wird der Träger getrocknet und bei 550 °C kalziniert.

Die Aufbringung der Aktivkomponenten erfolgt durch Tränken. Pro Kilokramm Träger werden
700 ml Ammoniumheptamolybdatlösung (18%ig)
700 ml Kobaltnitratlösung (7% CoO) und
700 ml Kaliumoxalatlösung (20%ig)
verwendet. Nach jeder Tränkung erfolgt eine Trocknung und Kalzination bei 550 °C.

Druckverlust pro m Höhe (bei w = 1 m/sec): $\frac{\Delta p}{H}$ =

$$600 \frac{mm\ WS}{m}$$

## Beispiel 2

Man verfährt wie in Beispiel 1, jedoch wird eine kreisförmige Auspressdüse (4 mm $\varnothing$) verwendet. Die chemische Zusammensetzung des Katalysators stimmt mit der aus Beispiel 1 überein.

Druckverlust pro m Höhe: $\dfrac{\Delta p}{H} = 620 \, \dfrac{mm \, WS}{m}$

## Beispiel 3

Katalysatoren gemäss Beispiel 1 und 2 werden für die Wassergaskonvertierung in einem Druckreaktor eingesetzt. Das umzusetzende Gas hat die oben angegebene Zusammensetzung.

Der Katalysator wird zunächst bei 350 °C zwölf Stunden lang mit einem $H_2S/H_2$-Gemisch geschwefelt, dann wird die Gasmischung zusammen mit Wasserdampf im Verhältnis 1:1 zugeführt. Der Gesamtdruck beträgt 30 bar, die Katalysatorbelastung 6000 l Trockengas/l Katalysator und Stunde. Folgende Daten wurden erhalten:

### Vol.% CO im Austrittsgas

| T (°C) | 4 mm Stern gem. Beisp. 1 | 4 mm Strang gem. Beisp. 2 | Gleich- gewicht |
|---|---|---|---|
| 250 | 0,85 | 1,30 | 0,36 |
| 275 | 0,65 | 0,95 | 0,53 |
| 300 | 0,80 | 0,90 | 0,76 |

## Beispiel 4

Man verfährt wie in Beispiel 3, jedoch werden folgende Verfahrensbedingungen eingestellt:

### Vol.% CO im Austrittsgas
Druck: 10 bar, Raumgeschwindigkeit: 3000 l/l · h

| T (°C) | 4 mm Stern | 4 mm Strang | Gleich- gewicht |
|---|---|---|---|
| 250 | 0,50 | 1,02 | 0,34 |
| 275 | 0,55 | 0,95 | 0,51 |
| 300 | 0,75 | 1,05 | 0,73 |

Druck: 10 bar, Raumgeschwindigkeit: 1000 l/l · h

| 220 | 0,40 | 0,75 | 0,20 |
| 250 | 0,45 | 0,60 | 0,34 |
| 280 | 0,62 | 0,80 | 0,51 |

## Beispiel 5

Man vermischt in einem Kneter
7,5 kg Aluminiumhydroxid (AlOOH)
2,5 kg Magnesiumoxid
1,3 kg Ammoniumheptamolybdat
2,6 kg Kobaltnitratlösung (15% CoO)
und verknetet unter Zugabe von Wasser bis das Material formfähig ist. Dann wird durch eine sternförmige Matrize (Aussenkreis des Sterns: 4 mm) extrudiert, das erhaltene Material getrocknet und bei 550 °C getempert. Anschliessend erfolgt eine Tränkung mit Kaliumoxalatlösung. Dazu werden in 7 l Wasser 1,8 kg Kaliumoxalat gelöst und das oben erhaltene Katalysatorvorprodukt mit dieser Lösung getränkt. Dann folgen Trocknung und Temperung (550 °C) des Katalysators.

Druckverlust pro m Höhe

bei Gasgeschw. 1 m/sec.: $\dfrac{\Delta p}{H} = 600 \, \dfrac{mm \, WS}{m}$

## Beispiel 6

Man verfährt wie in Beispiel 5, setzt jedoch für die Katalysatorverformung eine kreisförmige Matrize ($\varnothing$ 4 mm) ein.

Druckverlust pro m Höhe

bei Gasgeschw. 1 m/sec.: $\dfrac{\Delta p}{H} = 620 \, \dfrac{mm \, WS}{m}$

## Beispiel 7

Die Aktivitätsprüfung erfolgt wie in Beispiel 3 unter folgenden Bedingungen:
$CO_E = 10\%$; Dampf/Gas = 1,0; Druck: 30 bar; RG = 6000 l/l · h

### Vol.% CO im Gasaustritt

| T (°C) | 4 mm Stern gem. Beisp. 5 | 4 mm Strang gem. Beisp. 6 | Gleich- gewicht |
|---|---|---|---|
| 250 | 0,95 | 1,40 | 0,36 |
| 275 | 0,85 | 0,95 | 0,62 |
| 300 | 0,85 | 0,90 | 0,76 |

## Beispiel 8

Die Aktivitätsprüfung erfolgt wie in Beispiel 3 unter folgenden Bedingungen:
$CO_E = 10\%$; Dampf/Gas = 1,0; Druck: 10 bar; RG = 3000 l/l · h

### Vol.% CO im Gasaustritt

| T (°C) | 4 mm Stern gem. Beisp. 5 | 4 mm Strang gem. Beisp. 6 | Gleich- gewicht |
|---|---|---|---|
| 250 | 0,75 | 1,12 | 0,34 |
| 275 | 0,70 | 0,98 | 0,51 |
| 300 | 0,85 | 0,92 | 0,73 |

## Beispiel 9

Die mechanischen Eigenschaften der hergestellten Katalysatoren unter Betriebsbedingungen wurden festgestellt, indem die Katalysatoren 100 Stunden lang bei 50 bar und 300 °C mit Konvertierungsgas (s. Abschnitt Katalysatorprüfung) und Wasserdampf (D/G = 1,0) behandelt wurden.

| | Härte (kg/Extr.) | | Abrieb (%) | | Röntgen | |
|---|---|---|---|---|---|---|
| | vor Prüfung | nach | vor Prüfung | nach | vor Prüfung | nach |
| 4 mm-Stern (Beispiel 1) | 14,7 | 13,0 | 6,5 | 4,7 | Spinell | Spinell |
| 4 mm-Strang (Beispiel 2) | 8,2 | 7,1 | 9,2 | 4 | Spinell | Spinell |
| Al$_2$O$_3$-4 mm-Kugel (konventioneller Katalysatorträger) | 8,7 | 1,6 | 0,3 | 41 | Eta-Al$_2$O$_3$ | Böhmit |

**Patentansprüche**

1. Katalysator zur Umwandlung von Kohlenmonoxid und Wasserdampf in schwefelhaltigen Gasen zu Kohlendioxid und Wasserstoff, bestehend aus Oxiden und/oder Sulfiden der Elemente Kobalt und/oder Nickel, Molybdän und Alkalisalzen sowie einem Träger aus Magnesium-Aluminiumspinell, wobei der Katalysatorformkörper ring-, stern- oder kleeblattähnliche Querschnitte aufweist und von der Kugel- oder Zylinderform abweicht, indem ihre Querschnittsfläche kleiner als der sie umschreibende Kreis ist.

2. Verfahren nach Anspruch 1, dadurch gekennzeichnet, dass der Katalysatorformkörper eine sternförmige Querschnittsfläche oder sternförmige Querschnittsflächen mit abgerundeten Ecken beziehungsweise kleeblattförmige Querschnittsflächen besitzt.

3. Verfahren zur Herstellung eines Katalysators nach Ansprüchen 1 und 2, dadurch gekennzeichnet, dass das Trägermaterial zusammen mit den Aktivkomponenten vermischt, und die in eine verformbare Konsistenz gebrachte Masse ausgepresst oder tablettiert wird.

4. Verfahren zur Herstellung eines Katalysators nach Ansprüchen 1 und 2, dadurch gekennzeichnet, dass das Trägermaterial selbst bzw. das Trägermaterial zusammen mit einem Teil der Aktivkomponenten vermischt in eine verformbare Konsistenz gebracht, zu Formkörpern gepresst oder tablettiert wird, und die Aktivkomponenten bzw. ein Teil der Aktivkomponenten in einem oder mehreren Tränkschritten auf die Formkörper aufgebracht werden.

5. Anwendung der Katalysatoren nach den Ansprüchen 1 bis 4 für die Umwandlung von Kohlenmonoxid und Wasserdampf in schwefelhaltigen Gasen zu Kohlendioxid und Wasserstoff bei Temperaturen zwischen 180 und 550 °C und bei einem Druck zwischen 1 und 150 bar in einstufigen oder mehrstufigen Konvertierungsanlagen mit Zwischenkühlung zwischen den einzelnen Stufen.

6. Anwendung der Katalysatoren nach Anspruch 5, dadurch gekennzeichnet, dass bei einer mehrstufigen Konvertierung der Katalysator nur als Tieftemperaturkonvertierungskatalysator in der letzten Konvertierungsstufe oder in einer zweiten und einer dritten Konvertierungsstufe eingesetzt wird, während für die übrigen Konvertierungsstufen ein konventioneller Konvertierungskatalysator verwendet wird.

7. Anwendung des Katalysators nach den Ansprüchen 5 und 6, dadurch gekennzeichnet, dass man bei einstufigen oder bei mehrstufigen Konvertierungsanlagen in einer oder in mehreren Stufen jeweils nur einen Teil des konventionellen Katalysators durch den erfindungsgemässen ersetzt, insbesondere 10% bis 50% der oberen Teile der Katalysatorbetthöhe einer Konvertierungsstufe.

**Claims**

1. A catalyst for the conversion of carbon monoxide and steam in sulfur-containing gases into carbon dioxide and hydrogen, comprising oxides and/or sulfides of the elements cobalt and/or nickel or molybdenum, an alkali metal salt and a carrier composed of magnesium aluminium spinel, the catalyst molding having an annular, star-shaped or clover leaf-shaped cross-section, and differing from a spherical or cylindrical shape in that its cross-sectional area is smaller than the circle which circumscribes it.

2. A process as claimed in claim 1, wherein the catalyst molding has a star-shaped cross-section, a star-shaped cross-section with rounded points or a clover leaf-shaped cross-section.

3. A process for the preparation of a catalyst as claimed in claims 1 and 2, wherein the carrier material is mixed with the active components, and the material, brought to a moldable consistency, is extruded or tabletted.

4. A process for the preparation of a catalyst as claimed in claims 1 and 2, wherein the carrier material itself or the carrier material mixed with some of the active components is brought to a moldable consistency, compression-molded into moldings or tabletted, and the active components or the remainder of the active components are applied to the moldings in one or more steps, by impregnation.

5. The use of a catalyst as claimed in claims 1 to 4 for the conversion of carbon monoxide and steam in sulfur-containing gases into carbon dioxide and hydrogen at a temperature of from 180 to 550 °C and under a pressure of from 1 to 150 bars, in a single-stage or multi-stage-conversion plant with intercooling between the individual stages.

6. The use of a catalyst as claimed in claim 5, wherein, in a multi-stage conversion, the catalyst is only used as a low-temperature conversion catalyst in the last conversion stage or in the second and third conversion stages, whereas a conventional conversion catalyst is used in the other conversion stages.

7. The use of a catalyst as claimed in claims 5 and 6, wherein, in a single-stage or multi-stage conversion plant, only part of the conventional catalyst in one stage or in each of several stages is replaced by the catalyst according to the invention, especially from 10 to 50% of the upper part of the catalyst bed in a conversion stage being replaced.

**Revendications**

1. Catalyseur pour la transformation d'oxyde de carbone et de vapeur d'eau dans des gaz contenant du soufre en anhydride carbonique et en hydrogène, se composant d'oxydes et/ou de sulfures des éléments cobalt et/ou nickel, de molybdène et de sels alcalins, ainsi que d'un support de spinelle de magnésium-aluminium, les corps façonnés du catalyseur présentant des sections en forme d'anneau, d'étoile ou de feuille de trèfle et différant de la forme sphérique ou cylindrique par le fait que la surface de leur section est plus petite que celle du cercle qui les circonscrit.

2. Catalyseur selon la revendication 1, caractérisé en ce que le corps façonné de catalyseur présente en coupe une surface en forme d'étoile ou des surfaces en forme d'étoile à angles arrondis ou des surfaces en forme de feuille de trèfle.

3. Procédé pour la fabrication d'un catalyseur selon la revendication 1 ou 2, caractérisé en ce que la matière du support est mélangée avec les composants actifs et la masse, portée à une consistance se prêtant au moulage, est pressée ou pastillée.

4. Procédé pour la fabrication d'un catalyseur selon la reventication 1 ou 2, caractérisé en ce que la matière du support elle-même ou la matière du support en mélange avec une partie des composants actifs est portée à une consistance se prêtant au moulage, est pressée ou pastillée en corps façonnés et les composants actifs ou une partie des composants actifs sont appliqués sur les corps façonnés en une ou en plusieurs opérations d'imprégnation.

5. Utilisation des catalyseurs selon l'une quelconque des revendications 1 à 4 pour la transformation d'oxyde de carbone et de vapeur d'eau dans des gaz contenant du soufre en anhydride carbonique et en hydrogène, à des températures comprises entre 180 et 550 °C, sous une pression comprise entre 1 et 150 bars, dans des installations de conversion à un ou à plusieurs étages avec refroidissement intermédiaire entre les différents étages.

6. Utilisation des catalyseurs selon la revendication 5, caractérisée en ce que, dans le cas d'une conversion en plusieurs étages, le catalyseur n'est utilisé que comme catalyseur de conversion à basse température dans le dernier étage de conversion ou dans un second et un troisième étage de conversion, tandis qu'un catalyseur de conversion classique est utilisé pour les autres étages de conversion.

7. Utilisation du catalyseur selon la revendication 5 ou 6, caractérisée en ce qu'avec des installations de conversion à un étage ou à plusieurs étages, une partie seulement du catalyseur classique est remplacée, dans un ou plusieurs étages, par le catalyseur de l'invention, en particulier 10% à 50% de la partie supérieure de la hauteur de lit de catalyseur d'un étage de conversion.

FIG.1

FIG.3

FIG.2